# EUROPÄISCHE PATENTSCHRIFT

(11) **EP 2 316 042 B1**
(45) Veröffentlichungstag und Bekanntmachung des Hinweises auf die Patenterteilung: **14.03.2012**
(21) Anmeldenummer: 09779729.4
(22) Anmeldetag: 12.06.2009
(51) Int. Cl.: G01R 31/34

(54) **ELEKTROMOTORBAUGRUPPE, VERFAHREN ZUM BETREIBEN EINES ELEKTROMOTORS SOWIE MOTORSTEUEREINRICHTUNG**
ELECTRIC MOTOR ASSEMBLY, METHOD FOR OPERATING AN ELECTRIC MOTOR, AND MOTOR CONTROL DEVICE
ENSEMBLE MOTEUR ÉLECTRIQUE, PROCÉDÉ DE FONCTIONNEMENT DU MOTEUR ÉLECTRIQUE AINSI QUE DISPOSITIF DE GESTION DU MOTEUR

(30) Priorität: 19.08.2008 DE 102008041325
(43) Veröffentlichungstag der Anmeldung: 04.05.2011
(73) Patentinhaber: Robert Bosch GmbH, 70442 Stuttgart (DE)
(72) Erfinder: HESSERT, Henrik, 76185 Karlsruhe (DE); RIEHL, Guenther, 77815 Buehl (DE); KING, Christian, I-10135 Torino (IT); PODDEY, Christian, 76470 Oetigheim (DE); HELMING, Thomas, 76530 Baden-Baden (DE)
(86) Internationale Anmeldenummer: PCT/EP2009/057259
(87) Internationale Veröffentlichungsnummer: WO 2010/020444

(56) Entgegenhaltungen:
- DE-A1- 3 910 643
- DE-A1- 10 062 940
- DE-C2- 10 035 829
- US-A1- 2002 033 686
- US-A1- 2008 093 458

## Beschreibung

Die Erfindung betrifft eine Elektromotorbaugruppe, insbesondere zum Antreiben eines Lüfters für eine Motorkühlung und/oder einer Klimaanlage eines Kraftfahrzeugs, mit einem Elektromotor und mit einer Motorsteuereinrichtung zur Ansteuerung des Elektromotors. Die Erfindung umfasst ferner ein Verfahren zum Betreiben eines Elektromotors sowie eine Motorsteuereinrichtung.

### Stand der Technik

Elektromotorbaugruppen der eingangs genannten Art sind bekannt. Sie werden häufig zum Antreiben eines Lüfters eines Kraftfahrzeugs verwendet, wobei dieser beispielsweise der Motorkühlung und/oder der Klimaanlage zugeordnet ist. Zur Einstellung der Leistung des Lüfters wird eine Motorsteuereinrichtung, insbesondere ein Taktregler, zur Ansteuerung des Elektromotors verwendet. Der Taktregler wird beispielsweise nach Vorgabe einer Regelungs- beziehungsweise Steuerungseinrichtung einer Brennkraftmaschine so angesteuert, dass der Elektromotor des Lüfters in einem bestimmten Taktverhältnis betrieben wird. Damit kann eine nahezu beliebige Ansteuerung des Elektromotors in seinem gesamten Leistungsbereich erfolgen. Elektromotoren sind mit Toleranzen behaftet, die bei einer Auslegung einer Vorrichtung, beispielsweise der Motorkühlung oder der Klimaanlage, problematisch sind, da sie nur schwer zu berücksichtigen sind. Die Toleranzen können beispielsweise eine Leistungsaufnahme, eine Leistungsabgabe und/oder einen Wirkungsgrad der Motoren betreffen. Sollen diese Toleranzen eingeengt werden, beispielsweise durch eine hochpräzise Fertigung und/oder Aussortieren von Motoren, die außerhalb eines Toleranzbereichs liegen, entstehen vergleichsweise hohe Kosten. Daher wird aus Kostengründen meistens eine relativ große Toleranz bezüglich der elektrischen Leistungsaufnahme, der Leistungsabgabe und/oder dem Wirkungsgrad bei den Elektromotoren in Kauf genommen. Dies muss bei einer Auslegung der Vorrichtung berücksichtigt werden. Das bedeutet, dass mit dem Elektromotor der eine geringste Leistungsabgabe aufweist, eine geforderte minimale Leistung, beispielsweise eine Luftleistung, in der Vorrichtung erreicht werden muss, wie es z.B in Dokument DE10035829 beschrieben wird. Der Elektromotor mit einer größten Leistungsabgabe liefert in diesem Fall überschüssige Leistung, beispielsweise im Sinne eines Luftüberschusses, muss aber ebenso noch eingesetzt werden können. Für die Auslegung der abgegebenen Leistung ist also der Elektromotor mit der geringsten Leistungsabgabe bestimmend. Die Anforderungen müssen aber von allen Elektromotoren in dem zugelassenen Toleranzbereich erfüllt werden. Dies erfordert eine Auslegung von Verschleißteilen des Elektromotors, beispielsweise der Kohlebürsten, auf den Elektromotor mit der größten Leistungsabgabe, da bei diesem Motor unter Volllast die höchsten Verschleißeffekte auftreten. Da die Auslegung auf den Motor mit der größten Leistungsabgabe erfolgt, liegt für die meisten Einsatzzwecke eine Überdimensionierung vor. Die Betriebspunkte der Lüfterantriebe können durch Anparsen der Drehzahl-Drehmoment-Kennlinien verschoben werden, wie in den Dokumenten US 2008093458 und DE 3910643 beschrieben.

### Offenbarung der Erfindung

Demgegenüber weist die Elektromotorbaugruppe mit den in Anspruch 1 genannten Merkmalen den Vorteil auf, dass trotz der vorhandenen, relativ großen Toleranz bei den Elektromotoren eine Überdimensionierung des Elektromotors bei der Auslegung der Vorrichtung vermieden wird. Somit können kostengünstigere Komponenten verwendet werden. Dies wird erfindungsgemäß erreicht, indem die Motorsteuereinrichtung entsprechend einer Kennlinie des Elektromotors und/oder des Lüfters einstellbar und der Elektromotor so in seiner Leistung und/oder Drehzahl anpassbar ist. Die Kennlinie des Elektromotors wird beispielsweise nach der Herstellung des Elektromotors und/oder vor dessen Einbau bestimmt. Entsprechend der Kennlinie wird die Motorsteuereinrichtung eingestellt, um eine Anpassung der Leistung und/oder Drehzahl des Elektromotors zu erreichen. Der vorstehend beschriebene Toleranzbereich erstreckt sich von dem Elektromotor mit der geringsten Leistungsabgabe und/oder Drehzahl bis zu dem Elektromotor mit der größten Leistungsabgabe und/oder Drehzahl, für welchen die stärksten Verschleißeffekte auftreten. Es ist also vorteilhaft, die Leistung und/oder Drehzahl des Elektromotors mit der größten Leistungsabgabe so anzupassen, dass die Anforderungen an die Leistungsabgabe und/oder Drehzahl erfüllt, die Verschleißeffekte jedoch minimiert sind. Für die auszulegende Vorrichtung wird daher vorzugsweise ein Elektromotor verwendet, der auch bei der geringsten zulässigen Leistungsabgabe und/oder Drehzahl die geforderte Luftleistung beziehungsweise die geforderte Leistungsabgabe erbringen kann, während Elektromotoren, welche eine größere Leistungsabgabe und/oder Drehzahl aufweisen, mittels der Motorsteuereinrichtung auf Grundlage der Kennlinie des Elektromotors in ihrer Leistung und/oder Drehzahl angepasst, insbesondere begrenzt, werden. Das bedeutet, dass die Auswahl des Elektromotors für die auszulegende Vorrichtung lediglich nach einer Kenngröße, nämlich der geringsten Leistungsabgabe und/oder geringsten Drehzahl, erfolgen muss. Eine verkürzte Lebensdauer von Elektromotoren, welche eine höhere Leistung abgeben und/oder eine höhere Drehzahl aufweisen können, muss nur in geringem Maße berücksichtigt werden, da die Elektromotoren auf eine geringere Leistung und/oder Drehzahl begrenzt sind. Auf diese Weise kann entweder die Lebensdauer der Vorrichtung erhöht oder ein einfacherer und daher günstigerer Elektromotor verbaut werden. Wird der Elektromotor in einem Lüfter eingesetzt, so ist die geförderte Luftmenge im Wesentlichen abhängig von der Drehzahl des Elektromotors. Eine höhere Drehzahl als eine geforderte zieht also eine unnötig hohe Fördermenge nach sich und reduziert die Lebensdauer des Elektromotors. Häufig ist, im Falle des Lüfters, lediglich die gewünschte Luftmenge vorgegeben. Dabei wird bevorzugt die Begrenzung der Drehzahl durchgeführt. Es kann auch eine Kennlinie des Lüfters und nicht des Elektromotors zum Anpassen der Leistung und/oder der Drehzahl verwendet werden. In diesem Fall können auch Toleranzen der Vorrichtung, also insbesondere des Lüfters, berücksichtigt werden. Beispielsweise kann die Kennlinie die geförderte Luftmenge über der Drehzahl beschreiben und die Leistung beziehungsweise die Drehzahl des Lüfters auf eine geforderte Fördermenge eingestellt werden. Die Anpassung der Leistung und/oder Drehzahl sind in diesem Zusammenhang als Anpassung der maximalen Leistung und/oder der maximalen Drehzahl des Elektromotors zu verstehen. Es ist also eine Begrenzung der maximalen Leistung und/oder der maximalen Drehzahl vorgesehen.

Eine Weiterbildung der Erfindung sieht vor, dass die Kennlinie nach der Herstellung und/oder dem Einbau des Elektromotors, insbesondere mit einer Bandendeprüfung, bestimmt wird. Die Bestimmung der Kennlinie erfolgt auf geeignete Weise, beispielsweise auf einem Prüfstand. Besonders vorteilhaft ist es, die Kennlinie bei einer Bandendeprüfung zu ermitteln, welche in vielen Fällen ohnehin nach der Herstellung des Elektromotors und/oder nach dessen Einbau erfolgt, beispielsweise um diesen auf Funktionsfähigkeit zu überprüfen.

Eine Weiterbildung der Erfindung sieht vor, dass die Motorsteuereinrichtung ein Taktregler ist oder einen Taktregler aufweist. Der Taktregler besteht beispielsweise aus einer Schnittstelle zu einem Motorsteuergerät, einer Elektronik mit einem Rechner und Transistoren zur getakteten Ansteuerung des Elektromotors. Mittels des Taktreglers soll eine einheitliche Motorleistung der Elektromotoren realisiert werden. Die geschieht durch Anpassen des Ein-/Ausschaltverhältnisses der Transistoren an die Toleranzlage des Elektromotors beziehungsweise an die Kennlinie, sodass die Überdimensionierung des Elektromotors vermieden wird. Dabei kann die Motorsteuereinrichtung ein Taktregler sein. Alternativ ist vorgesehen, dass die Motorsteuereinrichtung einen Taktregler enthält.

Eine Weiterbildung der Erfindung sieht vor, dass die Kennlinie eine Leistungskennlinie und/oder Drehzahlkennlinie ist. Prinzipiell kann eine Beurteilung der Toleranzlage des Elektromotors auf einer beliebigen Kennlinie basieren. Vorteilhaft ist jedoch vorgesehen, dass eine Leistungskennlinie und/oder eine Drehzahlkennlinie verwendet wird/werden. In der Leistungskennlinie ist die Leistung des Elektromotors beziehungsweise ein Drehmoment über einem weiteren Wert, beispielsweise einer Drehzahl, festgehalten. Auf Basis der Leistungskennlinie ist es besonders einfach, die Motorsteuereinrichtung so einzustellen, dass der Elektromotor die gewünschte Leistung aufweist.

Eine Weiterbildung der Erfindung sieht vor, dass das Einstellen der Motorsteuereinrichtung, insbesondere einmalig, vor einem regulären Betrieb des Elektromotors erfolgt. Der Elektromotor wird also vor einem regulären Betrieb angepasst, das heißt, dass ein Betrieb zu Prüf- und/oder Testzwecken auch ohne Einstellen der Motorsteuereinrichtung erfolgen kann. Vorzugsweise wird das Einstellen der Motorsteuereinrichtung, insbesondere unmittelbar, vor oder nach einem Einbau in die auszulegende Vorrichtung durchgeführt. Besonders vorteilhaft ist es, wenn das Einstellen lediglich einmalig erfolgt, das Einstellen also so durchgeführt wird, dass mögliche Veränderungen der Leistung des Elektromotors, beispielsweise über dessen gesamte Lebensdauer hinweg, berücksichtigt werden. Erfolgt das Einstellen nach dem Einbau, hat dies den Vorteil, dass möglicherweise vorhandene Toleranzen der auszulegenden Vorrichtung mit berücksichtigt werden können.

Eine Weiterbildung der Erfindung sieht vor, dass die Motorsteuereinrichtung so eingestellt ist, dass die Kennlinie beziehungsweise die Leistung und/oder Drehzahl mit mindestens einer Kennlinie beziehungsweise mindestens einer Leistung und/oder Drehzahl weiterer, baugleicher Elektromotoren im Wesentlichen übereinstimmt. Wie vorstehend beschrieben liegt bei der Fertigung von Elektromotoren ein mitunter weites Toleranzfeld vor, wenn nicht kostenintensive Maßnahmen zu dessen Reduzierung getroffen werden. Daher ist die Kennlinie beziehungsweise die Leistung und/oder Drehzahl des Elektromotors mittels der Motorsteuereinrichtung auf die Kennlinie beziehungsweise die Leistung und/oder Drehzahl weiterer, baugleicher Elektromotoren, also beispielsweise Elektromotoren aus einer gleichen Fertigungsserie, abgestimmt. Auf diese Weise kann eine Vielzahl von Elektromotoren verbaut werden, deren Leistung und/oder Drehzahl sich über einen weiten Toleranzbereich erstreckt, und trotz allem eine im Wesentlichen gleiche Leistung und/oder Drehzahl der Elektromotoren gewährleistet sein.

Eine Weiterbildung der Erfindung sieht vor, dass die Leistung und/oder Drehzahl mittels eines, insbesondere aufgrund der Kennlinie bestimmten, Proportionalitätsfaktors festlegbar ist. Um in der Motorsteuereinrichtung nicht die vollständige Kennlinie vorhalten zu müssen ist es vorgesehen, dass lediglich ein Proportionalitätsfaktor festgelegt ist. Beispielsweise kann ein Prozentsatz der Maximalleistung des Elektromotors angegeben sein, mit welchem die gewünschte Leistungsabgabe erreicht wird. Wird ein Taktregler eingesetzt, so kann der Proportionalitätsfaktor beispielsweise die Einschaltdauer von Transistoren spezifizieren. Es kann beispielsweise vorgesehen sein, dass bei maximaler Leistungsanforderung ein Motor, der die geringste Leistungsabgabe und/oder Drehzahl aufweist, mit 100% Einschaltdauer der Transistoren angesteuert wird, während der Elektromotor mit der größten Leistungsabgabe und/oder Drehzahl lediglich 87% Einschaltdauer aufweist. Mit Vorteil wird der Proportionalitätsfaktor aus der Kennlinie bestimmt. Das heißt, dass die Kennlinie des Motors festgestellt wird und anschließend aus der Kennlinie der Proportionalitätsfaktor abgeleitet wird.

Eine Weiterbildung der Erfindung sieht vor, dass der Elektromotor mit einer Markierung versehen wird, über welchem ihm die Kennlinie und/oder der Proportionalitätsfaktor zuordenbar ist/sind. Es ist also vorgesehen, dass dem Elektromotor die bestimmte Kennlinie und/oder der bestimmte Proportionalitätsfaktor so zugeordnet ist/sind, dass er einfach ausgelesen werden kann. Zu diesem Zweck wird der Elektromotor mit einer Markierung versehen. Dabei kann die Kennlinie und/oder der Proportionalitätsfaktor in der Markierung codiert sein, oder aber die Markierung eine Kennung darstellen, über welche die Kennlinie und/oder der Proportionalitätsfaktor zugeordnet werden kann/können. In letzterem Fall ist die Markierung beispielsweise eine Seriennummer, wobei die Kennlinie und/oder der Proportionalitätsfaktor in einem zentralen Register, beispielsweise einer Datenbank, mit dieser Seriennummer verknüpft ist/sind. Vorteilhafterweise wird jedoch die erstgenannte Möglichkeit verwendet, nämlich dass die Kennlinie und/oder der Proportionalitätsfaktor unmittelbar in der Markierung enthalten ist/sind.

Eine Weiterbildung der Erfindung sieht vor, dass die Markierung ein Strichcode ist. Der Strichcode kann auf einfache Weise an dem Elektromotor angebracht werden. Es ist also einfach möglich, ihm eine eindeutige Kennung und/oder einen Datensatz zuzuordnen, in welchem/welchen die Kennlinie und/oder der Proportionalitätsfaktor und/oder die Seriennummer codiert ist/sind.

Eine Weiterbildung der Erfindung sieht vor, dass der Elektromotor eine größere als eine benötigte Leistung und/oder Drehzahl aufweist und mittels der Motorsteuereinrichtung auf die benötigte Leistung und/oder Drehzahl angepasst ist. Beispielsweise kann eine Fertigungsserie von Elektromotoren so ausgewählt werden, dass alle Elektromotoren die Anforderungen an eine minimale Leistungsabgabe und/oder Drehzahl erfüllen. In diesem Fall ist, bedingt durch die Toleranz der Leistung und/oder Drehzahl, die abgegebene Leistung und/oder Drehzahl einer Anzahl der Elektromotoren zu groß. Es ist hierbei vorgesehen, diese Elektromotoren mittels der Motorsteuereinrichtung so anzupassen, dass sie lediglich die benötigte Leistung und/oder Drehzahl liefern. Wie vorstehend beschrieben, wird auf diese Weise beispielsweise die Lebensdauer des Elektromotors erhöht oder aber die Verwendung von Elektromotoren einer einfacheren Baureihe, die daher kostengünstiger ist, ermöglicht.

Die Erfindung betrifft ferner ein Verfahren nach Anspruch 10 zum Betreiben eines Elektromotors, insbesondere gemäß den vorstehenden Ausführungen, wobei die Leistung und/oder Drehzahl des Elektromotors mittels einer Motorsteuereinrichtung, insbesondere eines Taktreglers, anpassbar ist, mit den Schritten: Bestimmen einer Kennlinie des Elektromotors und/oder einer mittels des Elektromotors antreibbaren Einrichtung nach der Herstellung, Zuordnen der Kennlinie und/oder eines, insbesondere aus der Kennlinie bestimmten, Proportionalitätsfaktors zu dem Elektromotor durch eine Markierung des Elektromotors, Anpassen der Motorsteuereinrichtung entsprechend der/dem durch die Markierung dem Elektromotor zugeordneten Kennlinie und/oder Proportionalitätsfaktor, und Betreiben des Elektromotors mit mittels der Motorsteuereinrichtung angepasster Leistung und/oder Drehzahl. Hinsichtlich der einzelnen Schritte wird auf die vorstehenden Ausführungen bezüglich der Elektromotorbaugruppe verwiesen.

Die Erfindung betrifft ferner eine Motorsteuereinrichtung, insbesondere Taktregler, zur Ansteuerung eines Elektromotors, insbesondere gemäß den vorstehenden Ausführungen und/oder zur Umsetzung des vorstehend beschriebenen Verfahrens. Dabei ist vorgesehen, dass die Motorsteuereinrichtung entsprechend einer Kennlinie des Elektromotors und/oder einer mittels des Elektromotors antreibbaren Einrichtung einstellbar und der Elektromotor so in seiner Leistung und/oder Drehzahl anpassbar ist. Die Motorsteuereinrichtung kann insbesondere der vorstehend beschriebenen Elektromotorbaugruppe zugeordnet sein.

### Kurze Beschreibung der Zeichnungen

Die Erfindung wird im Folgenden anhand der in der Zeichnung dargestellten Ausführungsbeispiele näher erläutert, ohne dass eine Beschränkung der Erfindung erfolgt. Es zeigen:
- Figur 1: ein Diagramm, in welchem eine Drehzahl über einem Drehmoment aufgetragen ist, wobei eine Kennlinie einer auszulegenden Vorrichtung sowie Kennlinien von Elektromotoren einer Elektromotorbaugruppe mit einem Toleranzbereich dargestellt sind, und
- Figur 2: das Diagramm der Figur 1, wobei der Toleranzbereich durch Verschieben einer Kennlinie des Elektromotors verringert ist.

### Ausführungsform(en) der Erfindung

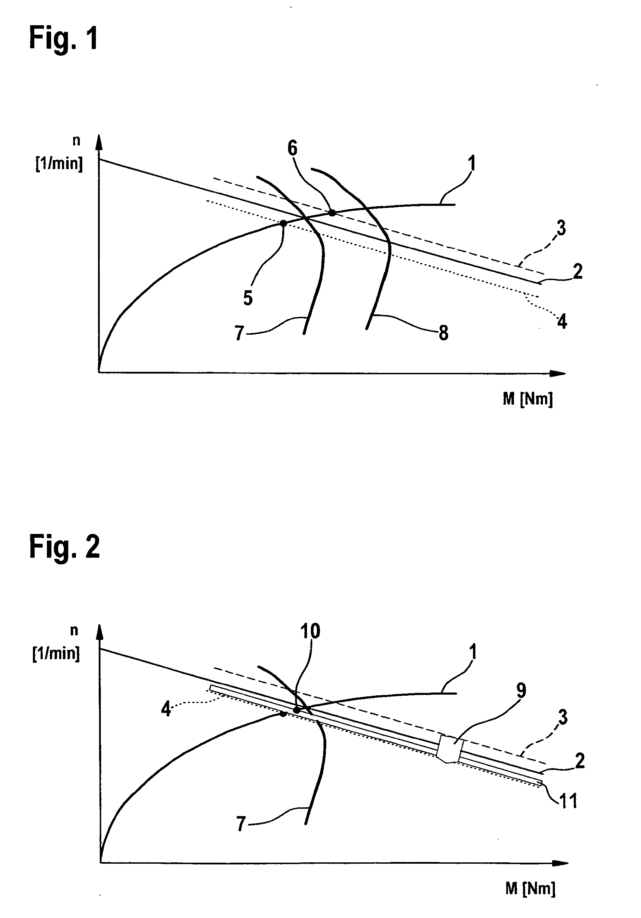

Die Figur 1 zeigt ein Diagram, in welchem eine Drehzahl n der Einheit (1/min) über einem Drehmoment M der Einheit [Nm] aufgetragen ist. Dargestellt ist eine Kennlinie 1 einer auszulegenden Vorrichtung (nicht dargestellt). Dargestellt sind außerdem Kennlinien 2, 3 und 4 einer Serie von Elektromotoren. Dabei beschreibt die Kennlinie 2 den über die Serie gemittelten Verlauf der Drehzahl n über dem Drehmoment M. Die Kennlinie 3 beschreibt einen Elektromotor, welcher in einem eingestellten Betriebspunkt eine größte Leistungsabgabe liefert, während die Kennlinie 4 den Elektromotor mit der geringsten Leistungsabgabe darstellt. Bei der Auslegung der Vorrichtung muss grundsätzlich darauf geachtet werden, dass die geringste Leistungsabgabe der Elektromotoren (also der in der Kennlinie 4 dargestellte Verlauf) größer ist als eine geringste zulässige Leistungsabgabe, welche von der Vorrichtung vorausgesetzt ist. Auf der anderen Seite muss beachtet werden, dass ein durch die Kennlinie 3 beschriebener Elektromotor, also der Elektromotor mit der größten Leistungsabgabe in dem bestimmten Betriebspunkt, höhere Verschleißeffekte aufweist, als der Elektromotor mit der geringsten Leistungsabgabe. Ein Betriebspunkt 5, welcher an dem Schnittpunkt der Kennlinie 1 mit der Kennlinie 4 liegt, ist der Betriebspunkt, an dem der Elektromotor mit der geringsten Leistungsabgabe betrieben wird. Dagegen beschreibt der Betriebspunkt 6, welcher an dem Schnittpunkt der Kennlinie 1 mit der Kennlinie 3 liegt, den Betriebspunkt des Elektromotors mit der höchsten Leistungsabgabe. Es ist offensichtlich, dass der Betriebspunkt 6 sowohl eine höhere Drehzahl n als auch ein höheres Drehmoment M als der Betriebpunkt 5 aufweist. Dies begründet den höheren Verschleiß des Elektromotors mit der größten Leistungsabgabe. Allerdings ist, wie vorstehend beschrieben, die Vorrichtung so ausgelegt, dass der Elektromotor mit der geringsten Leistungsabgabe ausreichend ist. Somit ist die höhere Drehzahl n beziehungsweise das höhere Drehmoment M des Betriebspunktes 6, das heißt die zusätzliche Leistungsabgabe im Vergleich zu dem Betriebspunkt 5, überschüssig und eigentlich nicht von der auszulegenden Vorrichtung benötigt, sondern führt lediglich zu dem beschriebenen höheren Verschleiß und damit einer kürzeren Lebenserwartung des Elektromotors. Daher muss üblicherweise eine höherwertige Auslegung der Elektromotoren gewählt werden, um sowohl die Anforderungen an die geringste zulässige Leistungsabgabe als auch die Lebensdauer des Elektromotors zu erfüllen. Dies ist jedoch kostspielig. Eventuell bedeutet die höherwertige Auslegung der Elektromotoren auch einen erhöhten Platzbedarf, was ebenfalls negativ zu werten ist. Der beschriebene Umstand ist in dem Diagramm in Einsatzbereichskennlinien 7 und 8 festgehalten. Diese Einsatzbereichskennlinien 7 und 8 geben die maximale Drehzahl n und das maximale Drehmoment M, also die maximal zulässige Leistung, an, bei welcher eine geforderte Lebensdauer des Elektromotors beziehungsweise der Elektromotoren erzielt wird. Die Einsatzbereichskennlinie 7 bezeichnet dabei eine normale und die Einsatzbereichskennlinie 8 eine höherwertige Ausbildung des Elektromotors. Es ist deutlich erkennbar, dass der Betriebspunkt 5 des Elektromotors mit der geringsten Leistungsabgabe linkerhand der Einsatzbereichskennlinie 7 liegt. Es kann also die normale Ausführung des Elektromotors verwendet werden, ohne dass ein vorzeitiger Ausfall zu befürchten ist. Dagegen liegt der Betriebspunkt 6 des Elektromotors mit der größten Leistungsabgabe auf der rechten Seite der Einsatzbereichskennlinie 7, sodass ein Ausfall des Elektromotors wahrscheinlich erscheint. Aus diesem Grund muss die höherwertige Ausführung des Elektromotors mit der Einsatzbereichkennlinie 8 verwendet werden. Hier liegt sowohl der Betriebspunkt 5 als auch der Betriebspunkt 6 linkerhand der Einsatzbereichkennlinie 8. Dies verursacht, wie vorstehend beschrieben, zusätzliche Kosten und hat möglicherweise ein höheres Gewicht und/oder ein größeres Bauvolumen des Elektromotors zur Folge.

Die Figur 2 zeigt das aus der Figur 1 bekannte Diagramm, wobei eine erfindungsgemäße Elektromotorbaugruppe eingesetzt wird, der Elektromotor also in seiner Leistung anpassbar ist. Die Elektromotorbaugruppe enthält eine Motorsteuereinrichtung, mit welcher der Elektromotor angesteuert wird. Mittels der Motorsteuereinrichtung kann eine Kennlinie des Elektromotors eingestellt und der Elektromotor so in seiner Leistung angepasst werden. Wie in dem Diagramm der Figur 1 erkennbar, wird die Motorsteuereinrichtung der Elektromotorbaugruppe verwendet, um den Elektromotor mit der größten Leistungsabgabe in seiner Leistung so anzupassen, dass ein dauerlauffester Betrieb möglich ist. Die Kennlinie 3 wird somit in Richtung des Pfeils 9 so verschoben, dass ein neuer Betriebspunkt 10, der an einem Schnittpunkt der Kennlinie 1 mit der durch die Anpassung der Leistung des Elektromotors entstandenen Kennlinie 11 liegt, linkerhand der Einsatzbereichkennlinie 7 positioniert ist. Die neue Kennlinie 11 verläuft nahezu deckungsgleich zu der Kennlinie 4 des Elektromotors mit der geringsten Leistungsabgabe. Somit kann mit allen Elektromotoren, also von dem Elektromotor mit der geringsten Leistungsabgabe hin zu dem Elektromotor mit der größten Leistungsabgabe, Dauerlauffestigkeit unter Verwendung der normalen Auslegung des Elektromotors (Einsatzbereichskennlinie 7) erreicht werden. Dies macht es möglich, sowohl die Kosten für eine höherwertige Auslegung des Elektromotors als auch Gewicht und zusätzlichen Bauraum einzusparen.

Ein weiterer Vorteil der Anpassung der Elektromotorbaugruppe ist die mögliche Realisierung eines Baukastensystems. Während beim derzeitigen Vorgehen (entsprechend Figur 1) für jedes Projekt eine eigene Auslegung des Elektromotors und in Folge dessen eine eigene Auslegung der Motorsteuereinrichtung erfolgt, kann bei Einstellen der Kennlinie des Elektromotors mittels der Motorsteuereinrichtung ein Baukastensystem für Elektromotor und Motorsteuereinrichtung eingesetzt werden. So wird beispielsweise aus drei Motorklassen eine geeignete Auswahl getroffen. Dabei kann für einige Anwendungen eine leichte Überdimensionierung des Elektromotors beziehungsweise der Elektromotorbaugruppe in Kauf genommen werden, da diese durch Einstellen der Motorsteuereinrichtung auf einen optimalen Betriebszustand angepasst werden kann. Damit ist die Komplexität in Entwicklung, Verkauf und Fertigung deutlich zu reduzieren. Beispielsweise kann aus dem Baukastensystem sowohl ein Elektromotor als auch eine Motorsteuereinrichtung ausgewählt werden. In der Endmontage der auszulegenden Vorrichtung werden diese Komponenten mit projektspezifischen Bauteilen, beispielsweise Lüftern und Zargen, zusammengebaut. Erst durch die Anpassung der Motorsteuereinrichtung auf projekttypische und elektromotorspezifische Leistungsanforderungen mittels eines Parametersatzes wird die Vorrichtung für den Anwendungsfall beziehungsweise an die Vorrichtung angepasst. Dabei kann beispielsweise eine geförderte Luftmenge eines Lüfters über eine Anpassung der Drehzahl eingestellt werden. Dies hat den Vorteil, dass auch Toleranzen der Vorrichtung, nicht nur des Elektromotors, berücksichtigt werden können. Bei dem aus dem Stand der Technik bekannten Vorgehen werden bei der Auslegung einer Vorrichtung für jedes Projekt spezifische Bauteile, beispielsweise Zarge und Lüfter, aber auch Elektromotor und Motorsteuereinrichtung, festgelegt. Dabei bilden Elektromotor und Motorsteuereinrichtung eine funktional aufeinander abgestimmte Einheit und müssen entwicklungsseitig so ausgelegt sein, dass alle Toleranzen berücksichtigt sind. Dies erfordert üblicherweise mehrere Iterationen und ist entsprechend aufwendig.

Die Vorteile der erfindungsgemäßen Elektromotorbaugruppe, dem Verfahren zum Betreiben eines Elektromotors und der Motorsteuereinrichtung sind also die kostengünstige Auslegung der Elektromotoren, der mögliche Einsatz von einer Elektromotorbaugruppe beziehungsweise eines Elektromotors und/oder einer Motorsteuereinrichtung für unterschiedliche Anwendungen, die mögliche Realisierung eines Baukastensystems für Motorsteuereinrichtung und Elektromotor, eine deutliche Reduzierung der Vielfalt an Elektromotoren und Motorsteuereinrichtungen, eine Komplexitätsreduzierung für Verkauf und Entwicklung und das Entfallen von zusätzlicher Sensorik, über welche beispielsweise eine Leistungsanpassung realisiert sein kann.

## Patentansprüche

1. Elektromotorbaugruppe, insbesondere zum Antreiben eines Lüfters für eine Motorkühlung und/oder einer Klimaanlage eines Kraftfahrzeugs, mit einem Elektromotor und mit einer Motorsteuereinrichtung zur Ansteuerung des Elektromotors, wobei die Motorsteuereinrichtung entsprechend einer Kennlinie (2,3,4) des Elektromotors und einer Kennlinie (1) des Lüfters einstellbar und der Elektromotor so in seiner Leistung und/oder Drehzahl anpassbar ist, **dadurch gekennzeichnet, dass** die Motorsteuereinrichtung so eingestellt ist, dass die Kennlinie (2,3,4) beziehungsweise die Leistung und/oder Drehzahl mit mindestens einer Kennlinie (2,3,4) beziehungsweise mindestens einer Leistung und/oder Drehzahl weiterer, baugleicher Elektromotoren im Wesentlichen übereinstimmt, und dass die Kennlinie (2, 3, 4) des Elektromotors unter Berücksichtigung einer Einsatzbereichskennlinie (7), die der normalen Auslegung der baugleichen Elektromotoren innerhalb der Elektromotorbaugruppe entspricht, in einem Drehzahl-Drehmoment-Diagramm so verschoben wird, dass über den Schnittpunkt (10) der Kennlinie (2, 3, 4) des Elektromotors mit der Kennlinie (1) des Lüfters oder der antreibbaren Einrichtung ein neuer Betriebspunkt eingestellt wird, der in einem durch die Einsatzbereichskennlinie (7) festgelegten Bereich liegt.

2. Elektromotorbaugruppe nach Anspruch 1, **dadurch gekennzeichnet, dass** die Kennlinie (1,2,3,4) nach der Herstellung und/oder dem Einbau des Elektromotors, insbesondere mit einer Bandendeprüfung, bestimmt wird.

3. Elektromotorbaugruppe nach einem der vorhergehenden Ansprüche, **dadurch gekennzeichnet, dass** die Motorsteuereinrichtung ein Taktregler ist oder einen Taktregler aufweist.

4. Elektromotorbaugruppe nach einem der vorhergehenden Ansprüche, **dadurch gekennzeichnet, dass** die Kennlinie (1,2,3,4) eine Leistungskennlinie und/oder eine Drehzahlkennlinie ist.

5. Elektromotorbaugruppe nach einem der vorhergehenden Ansprüche, **dadurch gekennzeichnet, dass** das Einstellen der Motorsteuereinrichtung, insbesondere einmalig, vor einem regulären Betrieb des Elektromotors erfolgt.

6. Elektromotorbaugruppe nach einem der vorhergehenden Ansprüche, **dadurch gekennzeichnet, dass** die Leistung und/oder Drehzahl mittels eines, insbesondere aufgrund der Kennlinie (1,2,3,4) bestimmten, Proportionalitätsfaktors festlegbar ist.

7. Elektromotorbaugruppe nach einem der vorhergehenden Ansprüche, **dadurch gekennzeichnet, dass** der Elektromotor mit einer Markierung versehen wird, über welche ihm die Kennlinie (1,2,3,4) und/oder der Proportionalitätsfaktor zuordenbar ist/sind.

8. Elektromotorbaugruppe nach einem der vorhergehenden Ansprüche, **dadurch gekennzeichnet, dass** die Markierung ein Strichcode ist.

9. Elektromotorbaugruppe nach einem der vorhergehenden Ansprüche, **dadurch gekennzeichnet, dass** der Elektromotor eine größere als eine benötigte Leistung und/oder Drehzahl aufweist und mittels der Motorsteuereinrichtung auf die benötigte Leistung und/oder Drehzahl angepasst ist.

10. Verfahren zum Betreiben eines Elektromotors, insbesondere nach einem oder mehreren der vorhergehenden Ansprüche, wobei die Leistung und/oder Drehzahl des Elektromotors mittels einer Motorsteuereinrichtung, insbesondere eines Taktreglers, anpassbar ist, mit den Schritten:
- Bestimmen einer Kennlinie (2,3,4) des Elektromotors und einer Kennlinie (1) einer mittels des Elektromotors antreibbaren Einrichtung nach der Herstellung,
- Zuordnen der Kennlinie (1,2,3,4) und/oder eines, insbesondere aus der Kennlinie (1,2,3,4) bestimmten, Proportionalitätsfaktors zu dem Elektromotor durch eine Markierung des Elektromotors,
- Anpassen der Motorsteuereinrichtung entsprechend der/dem durch die Markierung dem Elektromotor zugeordneten Kennlinie (1,2,3,4) und/oder Proportionalitätsfaktor,
- Betreiben des Elektromotors mit mittels der Motorsteuereinrichtung angepasster Leistung und/oder Drehzahl,
**dadurch gekennzeichnet, dass** die Motorsteuereinrichtung so eingestellt wird, dass die Kennlinie (2,3,4) beziehungsweise die Leistung und/oder Drehzahl mit mindestens einer Kennlinie (2,3,4) beziehungsweise mindestens einer Leistung und/oder Drehzahl weiterer, baugleicher Elektromotoren im Wesentlichen übereinstimmt, und dass die Kennlinie (2, 3, 4) des Elektromotors unter Berücksichtigung einer Einsatzbereichskennlinie (7), die der normalen Auslegung der baugleichen Elektromotoren innerhalb der Elektromotorbaugruppe entspricht, in einem Drehzahl-Drehmoment-Diagramm so verschoben wird, dass über den Schnittpunkt (10) der Kennlinie (2, 3, 4) des Elektromotors mit der Kennlinie (1) des Lüfters oder der antreibbaren Einrichtung ein neuer Betriebspunkt eingestellt wird, der in einem durch die Einsatzbereichskennlinie (7) festgelegten Bereich liegt.

11. Motorsteuereinrichtung, insbesondere Taktregler, zur Ansteuerung eines Elektromotors, nach einem oder mehreren der Ansprüche 1 bis 9 und/oder zur Umsetzung des Verfahrens nach Anspruch 10, wobei die Motorsteuereinrichtung entsprechend einer Kennlinie (2,3,4) des Elektromotors und einer Kennlinie (1) einer mittels des Elektromotors antreibbaren Einrichtung einstellbar und der Elektromotor so in seiner Leistung und/oder Drehzahl anpassbar ist, **dadurch gekennzeichnet, dass** die Motorsteuereinrichtung so eingestellt ist, dass die Kennlinie (2,3,4) beziehungsweise die Leistung und/oder Drehzahl mit mindestens einer Kennlinie (2,3,4) beziehungsweise mindestens einer Leistung und/oder Drehzahl weiterer, baugleicher Elektromotoren im Wesentlichen übereinstimmt, und dass die Kennlinie (2, 3, 4) des Elektromotors unter Berücksichtigung einer Einsatzbereichskennlinie (7), die der normalen Auslegung der baugleichen Elektromotoren innerhalb der Elektromotorbaugruppe entspricht, in einem Drehzahl-Drehmoment-Diagramm so verschoben wird, dass über den Schnittpunkt (10) der Kennlinie (2, 3, 4) des Elektromotors mit der Kennlinie (1) des Lüfters oder der antreibbaren Einrichtung ein neuer Betriebspunkt eingestellt wird, der in einem durch die Einsatzbereichskennlinie (7) festgelegten Bereich liegt.

## Claims

1. Electric motor assembly, in particular for driving a fan for engine cooling, and/or for an air-conditioning system, in a motor vehicle, having an electric motor and having a motor control device for controlling the electric motor, wherein the motor control device can be adjusted in accordance with a characteristic (2, 3, 4) of the electric motor and of a characteristic (1) of the fan, and the power and/or rotation speed of the electric motor can thus be adapted, **characterized in that** the motor control device is set such that the characteristic (2, 3, 4) and the power and/or rotation speed substantially matches at least one characteristic (2, 3, 4) and/or at least one power and/or rotation speed of further electric motors of the same type, and **in that** the characteristic (2, 3, 4) of the electric motor is shifted on a rotation-speed/torque graph taking account of an operating range characteristic (7), which corresponds to the normal design of the electric motors of the same type within the electric motor assembly, such that a new operating point, which is located in an area defined by the operating range characteristic (7), is set via the intersection point (10) of the characteristic (2, 3, 4) of the electric motor with the characteristic (1) of the fan or of the device which can be driven.

2. Electric motor assembly according to Claim 1, **characterized in that** the characteristic (1, 2, 3, 4) is defined after the production and/or the installation of the electric motor, in particular by means of a belt end test.

3. Electric motor assembly according to one of the preceding claims, **characterized in that** the motor control device is a clock regulator or has a clock regulator.

4. Electric motor assembly according to one of the preceding claims, **characterized in that** the characteristic (1, 2, 3, 4) is a power characteristic and/or a rotation-speed characteristic.

5. Electric motor assembly according to one of the preceding claims, **characterized in that** the motor control device is set, in particular once, before normal operation of the electric motor.

6. Electric motor assembly according to one of the preceding claims, **characterized in that** the power and/or rotation speed can be defined by means of a proportionality factor which is determined in particular on the basis of the characteristic (1, 2, 3, 4).

7. Electric motor assembly according to one of the preceding claims, **characterized in that** the electric motor is provided with a marking via which the characteristic (1, 2, 3, 4) and/or the proportionality factor can be associated with it.

8. Electric motor assembly according to one of the preceding claims, **characterized in that** the marking is a barcode.

9. Electric motor assembly according to one of the preceding claims, **characterized in that** the electric motor has a higher power and/or rotation speed than is required, and is matched to the required power and/or rotation speed by means of the motor control device.

10. Method for operation of an electric motor, in particular according to one or more of the preceding claims, wherein the power and/or the rotation speed of the electric motor can be adapted by means of a motor control device, in particular a clock regulator, having the following steps:
- determination of a characteristic (2, 3, 4) of the electric motor and of a characteristic (1) of a device which can be driven by means of the electric motor, after production,
- association of the characteristic (1, 2, 3, 4) and/or of a proportionality factor which is determined, in particular, from the characteristic (1, 2, 3, 4) with the electric motor by means of a marking on the electric motor,
- adaptation of the motor control device corresponding to the characteristic (1, 2, 3, 4) and/or proportionality factor associated with the electric motor by the marking,
- operation of the electric motor at a power and/or rotation speed adapted by means of the motor control device,
**characterized in that** the motor control device is set such that the characteristic (2, 3, 4) and the power and/or rotation speed substantially matches at least one characteristic (2, 3, 4) and/or at least one power and/or rotation speed of further electric motors of the same type, and **in that** the characteristic (2, 3, 4) of the electric motor is shifted on a rotation-speed/torque graph taking account of an operating range characteristic (7), which corresponds to the normal design of the electric motors of the same type within the electric motor assembly, such that a new operating point, which is located in an area defined by the operating range characteristic (7), is set via the intersection point (10) of the characteristic (2, 3, 4) of the electric motor with the characteristic (1) of the fan or of the device which can be driven.

11. Motor control device, in particular a clock regulator, for controlling an electric motor according to one or more of Claims 1 to 9 and/or for carrying out the method according to Claim 10, wherein the motor control device can be set in accordance with a characteristic (2, 3, 4) of the electric motor and of a characteristic (1) of a device which can be driven by means of the electric motor, and the power and/or rotation speed of the electric motor can be adapted, **characterized in that** the motor control device is set such that the characteristic (2, 3, 4) and the power and/or rotation speed substantially match at least one characteristic (2, 3, 4) and/or at least one power and/or rotation speed of further electric motors of the same type, and **in that** the characteristic (2, 3, 4) of the electric motor is shifted on a rotation-speed/torque graph taking account of an operating range characteristic (7), which corresponds to the normal design of the electric motors of the same type within the electric motor assembly, such that a new operating point, which is located in an area defined by the operating range characteristic (7), is set via the intersection point (10) of the characteristic (2, 3, 4) of the electric motor with the characteristic (1) of the fan or of the device which can be driven.

## Revendications

1. Ensemble de moteur électrique, en particulier pour l'entraînement d'un ventilateur de refroidissement du moteur et/ou de l'installation de climatisation d'un véhicule automobile, l'ensemble comprenant
un moteur électrique et un dispositif de commande du moteur qui commande le moteur électrique,
le dispositif de commande du moteur pouvant être réglé en correspondance à une ligne caractéristique (2, 3, 4) du moteur électrique et d'une ligne caractéristique (1) du ventilateur de manière à pouvoir adapter la puissance et/ou la vitesse de rotation du moteur électrique,
**caractérisé en ce que**
le dispositif de commande du moteur est réglé de telle sorte que la ligne caractéristique (2, 3, 4), la puissance et/ou la vitesse de rotation correspondent essentiellement à au moins une ligne caractéristique (2, 3, 4) ou à au moins une puissance et/ou une vitesse de rotation d'autres moteurs électriques de même construction et
**en ce que** la ligne caractéristique (2, 3, 4) du moteur électrique est déplacée dans un diagramme de vitesse de rotation-couple de rotation en tenant compte d'une ligne caractéristique (7) de plage d'utilisation qui correspond à la conception normale des moteurs électriques de même construction d'un groupe de moteurs électriques, de telle sorte qu'un nouveau point de fonctionnement situé dans une plage définie par la ligne caractéristique (7) de plage d'utilisation soit établi par l'intermédiaire du point de concours (10) entre la ligne caractéristique (2, 3, 4) du moteur électrique et la ligne caractéristique (1) du ventilateur ou du dispositif entraîné.

2. Ensemble de moteur électrique selon la revendication 1, **caractérisé en ce que** la ligne caractéristique (1, 2, 3, 4) est définie après la fabrication et/ou le montage du moteur électrique, en particulier par un test en fin de ligne.

3. Ensemble de moteur électrique selon l'une des revendications précédentes, **caractérisé en ce que** le dispositif de commande du moteur est un régulateur de cadençage ou présente un régulateur de cadençage.

4. Ensemble de moteur électrique selon l'une des revendications précédentes, **caractérisé en ce que** la ligne caractéristique (1, 2, 3, 4) est une ligne caractéristique de puissance et/ou une ligne caractéristique de vitesse de rotation.

5. Ensemble de moteur électrique selon l'une des revendications précédentes, **caractérisé en ce que** le réglage du dispositif de commande du moteur s'effectue en particulier une seule fois, avant le fonctionnement régulier du moteur électrique.

6. Ensemble de moteur électrique selon l'une des revendications précédentes, **caractérisé en ce que** la puissance et/ou la vitesse de rotation peuvent être définies au moyen d'un facteur de proportionnalité déterminé en particulier sur base de la ligne caractéristique (1, 2, 3, 4).

7. Ensemble de moteur électrique selon l'une des revendications précédentes, **caractérisé en ce que** le moteur électrique est doté d'un marquage qui permet de lui associer la ligne caractéristique (1, 2, 3, 4) et/ou le facteur de proportionnalité.

8. Ensemble de moteur électrique selon l'une des revendications précédentes, **caractérisé en ce que** le marquage est un code à barres.

9. Ensemble de moteur électrique selon l'une des revendications précédentes, **caractérisé en ce que** la puissance et/ou la vitesse de rotation du moteur électrique sont supérieures à ce qui est nécessaire et peuvent être adaptées au moyen du dispositif de commande du moteur à la puissance et/ou à la vitesse de rotation nécessaires.

10. Procédé d'utilisation d'un moteur électrique, en particulier selon l'une ou plusieurs des revendications précédentes, dans lequel la puissance et/ou la vitesse de rotation du moteur électrique peuvent être adaptées au moyen d'un dispositif de commande du moteur et en particulier d'un régulateur de cadençage, le procédé comportant les étapes qui consistent à :
- déterminer après la fabrication une ligne caractéristique (2, 3, 4) du moteur électrique et une ligne caractéristique (1) d'un dispositif apte à être entraîné au moyen du moteur électrique,
- associer par un marquage du moteur électrique la ligne caractéristique (1, 2, 3, 4) et/ou un facteur de proportionnalité défini en particulier à partir de la ligne caractéristique (1, 2, 3, 4) au moteur électrique,
- adapter la dispositif de commande du moteur en fonction de la ligne caractéristique (1, 2, 3, 4) et/ou du facteur de proportionnalité associés au moteur électrique par le marquage et
- utiliser le moteur électrique à une puissance et/ou une vitesse de rotation adaptées au dispositif de commande du moteur,
**caractérisé en ce que**
le dispositif de commande du moteur est réglé de telle sorte que la ligne caractéristique (2, 3, 4), la puissance et/ou la vitesse de rotation correspondent essentiellement à au moins une ligne caractéristique (2, 3, 4), à au moins une puissance et/ou à une vitesse de rotation d'autres moteurs électriques de même construction et
**en ce que en ce que** la ligne caractéristique (2, 3, 4) du moteur électrique est déplacée dans un diagramme de vitesse de rotation-couple de rotation en tenant compte d'une ligne caractéristique (7) de plage d'utilisation qui correspond à la conception normale des moteurs électriques de même construction d'un groupe de moteurs électriques, de telle sorte qu'un nouveau point de fonctionnement situé dans une plage définie par la ligne caractéristique (7) de plage d'utilisation soit établi par l'intermédiaire du point de concours (10) entre la ligne caractéristique (2, 3, 4) du moteur électrique et la ligne caractéristique (1) du ventilateur ou du dispositif entraîné.

11. Dispositif de commande de moteur, en particulier régulateur de cadençage, destiné à commander un moteur électrique selon l'une ou plusieurs des revendications 1 à 9 et/ou pour mettre en oeuvre le procédé selon la revendication 10, le dispositif de commande de moteur pouvant être réglé en fonction d'une ligne caractéristique (2, 3, 4) du moteur électrique et d'une ligne caractéristique (1) d'un dispositif entraîné au moyen du moteur électrique, ce qui permet d'adapter la puissance et/ou la vitesse de rotation du moteur électrique,
**caractérisé en ce que**
le dispositif de commande de moteur est réglé de telle sorte que la ligne caractéristique (2, 3, 4), la puissance et/ou la vitesse de rotation correspondent essentiellement à au moins une ligne caractéristique (2, 3, 4), à au moins une puissance et/ou à une vitesse de rotation d'autres moteurs électriques de même construction et
**en ce que en ce que** la ligne caractéristique (2, 3, 4) du moteur électrique est déplacée dans un diagramme de vitesse de rotation-couple de rotation en tenant compte d'une ligne caractéristique (7) de plage d'utilisation qui correspond à la conception normale des moteurs électriques de même construction d'un groupe de moteurs électriques, de telle sorte qu'un nouveau point de fonctionnement situé dans une plage définie par la ligne caractéristique (7) de plage d'utilisation soit établi par l'intermédiaire du point de concours (10) entre la ligne caractéristique (2, 3, 4) du moteur électrique et la ligne caractéristique (1) du ventilateur ou du dispositif entraîné.
